# FASCICULE DE BREVET EUROPEEN

(11) **EP 3 926 837 B1**
(45) Date de publication et mention de la délivrance du brevet: **20.08.2025**
(21) Numéro de dépôt: 21177903.8
(22) Date de dépôt: 07.06.2021
(51) Int. Cl.: H04B 1/00, H04B 1/16, H04L 27/233, H04W 52/02, H04L 25/03, G06N 3/08

(54) **PROCÉDÉ DE RÉCEPTION DE DONNÉES DANS UNE TRANSMISSION RADIOFRÉQUENCE**
VERFAHREN ZUM EMPFANG VON DATEN IN EINER FUNKFREQUENZÜBERTRAGUNG
METHOD FOR RECEIVING DATA IN A RADIOFREQUENCY TRANSMISSION

(30) Priorité: 19.06.2020 FR 2006434
(43) Date de publication de la demande: 22.12.2021
(73) Titulaire: STMicroelectronics France, 92120 Montrouge (FR)
(72) Inventeur: DAUTRICHE, M. Pierre, 38330 MONTBONNOT (FR); ENGELS, Sylvain, 38240 MEYLAN (FR)
(74) Mandataire: Casalonga

(56) Documents cités:
- WO-A1-2013/045362
- FR-A1- 2 892 587
- US-A1- 2019 319 658
- YAO L ET AL: "A 1.8-V 6-bit flash ADC with rail-to-rail input range in 0.18 [mu]m CMOS", 2008 INTERNATIONAL SYMPOSIUM ON SEMICONDUCTOR MANUFACTURING (ISSM), IEEE, PISCATAWAY, NJ, USA, vol. 1, 21 October 2003 (2003-10-21), pages 677, XP033770622, ISSN: 1523-553X, ISBN: 978-0-7803-7889-6, DOI: 10.1109/ICASIC.2003.1277639

## Description

Des modes de réalisation et de mise en œuvre concernent la transmission radiofréquence, et notamment les radios logicielles.

Une radio logicielle (désignée également par l'acronyme « SDR », de l'anglais « software-defined radio »), est un dispositif récepteur ou éventuellement un émetteur radiofréquence réalisé principalement par logiciel et dans une moindre mesure par matériel.

En particulier, un dispositif récepteur de type radio logicielle comprend généralement une antenne configurée pour recevoir un signal radiofréquence modulé et un convertisseur radiofréquence-numérique permettant de convertir le signal radiofréquence reçu en un signal numérique brut. Le dispositif récepteur de type radio logicielle peut également comprendre un démodulateur d'amplitude. Le signal numérique démodulé ainsi obtenue peut ensuite être traité par un logiciel.

De telles opérations de traitement peuvent être réalisées à l'aide d'un microprocesseur dédié au traitement du signal tel qu'un DSP (de l'anglais « Digital Signal Processor »), d'un circuit intégré dédié, tel qu'un ASIC (de l'anglais « Application Specific Integrated Circuit »), d'un circuit électronique programmable, tel qu'un FPGA (de l'anglais « Field Programmable Gate Array »), ou à l'aide d'un processeur d'un ordinateur.

Les radios logicielles présentent l'avantage qu'il suffit de changer ou d'adapter le logiciel pour fonctionner avec un système radio différent. Par exemple, les radios logicielles peuvent fonctionner pour recevoir des signaux Wi-Fi, des signaux LTE (de l'anglais « Long Term Evolution ») ainsi que des signaux Bluetooth.

Néanmoins, les radios logicielles connues consomment beaucoup d'énergie.

En particulier, les convertisseurs radiofréquence-numérique des radios logicielles nécessitent de générer des horloges d'échantillonnage qui consomment une grande quantité d'énergie.

Plus particulièrement, il est souvent nécessaire d'utiliser des horloges d'échantillonnage haute fréquence pour obtenir un signal numérique représentatif du signal radiofréquence d'origine.

En outre, l'échantillonnage nécessite de limiter la largeur de bande du signal.

Par ailleurs, il est possible que certains signaux radiofréquences soient échantillonnés de façon à obtenir des signaux numériques qui sont ensuite démodulés alors que le dispositif récepteur n'est pas le destinataire de ce signal. L'énergie fournie pour échantillonner le signal radiofréquence puis démoduler le signal numérique est donc consommée inutilement.

Or, dans certaines applications il est préférable de limiter au maximum la consommation d'énergie. En particulier, les radios logicielles peuvent être utilisées dans le domaine de l'Internet des objets de façon à permettre une communication entre un objet et le réseau Internet. US 2019/319658 divulgue un dispositif récepteur configuré pour traiter un signal radiofréquence , le dispositif comprenant un convertisseur analogique-numérique et un réseau neuronal configuré pour effectuer une classification d'un schéma de modulation du signal numérique.

Ainsi, il existe un besoin de proposer un procédé de réception d'un signal radiofréquence permettant de réduire la consommation d'énergie par rapport aux procédés de réception connus.

Selon un aspect, il est proposé un procédé de réception de données dans une transmission radiofréquence comprenant :
- une réception d'un signal radiofréquence d'une nature donnée et une conversion du signal radiofréquence en un signal électrique,
- au moins une détection d'au moins un niveau de tension dans le signal électrique,
- une élaboration d'au moins un train d'impulsions représentatifs de chaque détection,
- une détermination de la nature du signal radiofréquence à partir dudit au moins un train d'impulsions.

La nature du signal radiofréquence peut être soit une conformité à une norme ou à un protocole. Par exemple, le signal radiofréquence peut être un signal Wi-Fi ou Bluetooth ou encore LTE (de l'anglais « Long Term Evolution »).

Le train d'impulsions est associé au signal radiofréquence.

La détermination de la nature du signal radiofréquence permet de savoir si le signal radiofréquence doit être traité ou non.

Ainsi, la détermination de la nature du signal radiofréquence à partir d'une élaboration d'un train d'impulsions permet d'éviter de procéder, pour tout signal radiofréquence reçu, à un échantillonnage du signal radiofréquence de façon à obtenir un signal numérique, puis à une démodulation du signal numérique.

Ainsi, le procédé de réception permet d'éviter de générer une horloge d'échantillonnage pour la détermination de la nature du signal radiofréquence.

Un tel procédé permet donc de réduire la consommation d'énergie pour déterminer la nature d'un signal radiofréquence. Un tel procédé permet également de réduire le nombre d'échantillons à analyser en analysant uniquement un nombre réduit d'impulsions.

Un tel procédé permet également d'éviter d'avoir des conditions limitées concernant la largeur de bande du signal radiofréquence reçu.

De préférence, un tel procédé peut permettre de détecter plusieurs natures de signal radiofréquence. Néanmoins, il est possible de prévoir un procédé de réception dans lequel une seule nature de signal peut être déterminée.

Dans un mode de mise en œuvre avantageux, le signal radiofréquence comporte un en-tête représentatif de la nature du signal radiofréquence, ladite élaboration comprenant une élaboration d'au moins un train d'impulsions associé à l'en-tête du signal radiofréquence reçu.

La détermination de la nature du signal radiofréquence comprend une mise en œuvre d'un réseau de neurones artificiel.

De préférence, le réseau de neurones est entraîné préalablement pour reconnaître au moins une nature de signal radiofréquence à partir de trains d'impulsions déjà classifiés.

Le réseau de neurones artificiel comprend une succession de couches dont une couche d'entrée pour récupérer les trains d'impulsions élaborés, au moins une couche cachée de convolution et/ou de propagation pour élaborer des trains d'impulsions corrigés comprenant des impulsions représentatives de la nature du signal radiofréquence et une couche de sortie pour transmettre les trains d'impulsions corrigés.

La nature du signal radiofréquence est identifiée à partir des trains d'impulsions corrigés.

De préférence, la détection d'au moins un niveau de tension du signal électrique comprend une comparaison du signal électrique à au moins un seuil.

Dans un mode de mise en œuvre avantageux, le procédé comprend, une fois la nature du signal déterminée, un échantillonnage puis un traitement du signal électronique conforme à la nature du signal radiofréquence déterminée.

En variante, le procédé comprend un décodage du signal radiofréquence à partir dudit au moins un train d'impulsions corrigé, en fonction de la nature déterminée du signal radiofréquence.

Dans un mode de mise en œuvre, le signal radiofréquence est choisi parmi un signal Wi-Fi, un signal Bluetooth et un signal LTE.

Selon un autre aspect, il est proposé un dispositif récepteur radiofréquence comprenant :
- une interface d'entrée configurée pour recevoir un signal radiofréquence d'une nature donnée et le convertir en un signal électrique,
- des moyens de détection configurés pour détecter au moins un niveau de tension dans le signal électrique,
- un générateur d'impulsions configuré pour élaborer au moins un train d'impulsions représentatifs des niveaux de tension détectés,

∘ une unité de traitement configurée pour déterminer la nature du signal radiofréquence à partir dudit au moins un train d'impulsions.

L'interface d'entrée peut comprendre une antenne configurée pour recevoir le signal radiofréquence et le convertir en un signal électrique. L'interface d'entrée peut comprendre en outre un amplificateur, notamment un amplificateur faible bruit, configuré pour amplifier le signal électrique délivré par l'antenne.

Dans un mode de réalisation avantageux, l'interface d'entrée est configurée pour recevoir un signal radiofréquence comportant un en-tête représentatif de la nature du signal radiofréquence. Le générateur d'impulsions est alors configuré pour élaborer au moins un train d'impulsions associé à l'en-tête du signal radiofréquence reçu.

L'unité de traitement est configurée pour mettre en œuvre un réseau de neurones artificiel pour déterminer la nature du signal radiofréquence. Le réseau de neurones artificiel comprend une succession de couches dont une couche d'entrée pour récupérer les trains d'impulsions élaborés, au moins une couche cachée de convolution et/ou de propagation pour élaborer des trains d'impulsions corrigés comprenant des impulsions représentatives de la nature du signal radiofréquence et une couche de sortie pour transmettre les trains d'impulsions corrigés.

Le dispositif récepteur comprend un décodeur configuré pour identifier la nature du signal radiofréquence à partir des impulsions des trains d'impulsions corrigés.

L'unité de traitement peut être configurée pour mettre en œuvre ce décodeur.

Dans un mode de réalisation avantageux, les moyens de détection comprennent au moins un comparateur configuré pour détecter au moins un niveau de tension du signal électrique en comparant le signal électrique à au moins un seuil.

Le générateur d'impulsions prend alors en entrée les signaux de sortie du comparateur et génère une impulsion lorsque les signaux de sortie du comparateur indiquent que le niveau de tension du signal radiofréquence est supérieur à au moins un seuil.

Dans un mode de réalisation avantageux, le dispositif récepteur comprend en outre des moyens de traitement de signal, configurés pour, une fois que la nature du signal radiofréquence a été déterminée, échantillonner puis traiter le signal électrique conformément à la nature du signal déterminée, notamment si la nature déterminée du signal radiofréquence est une nature pouvant être traitée par les moyens de traitement de signal.

L'échantillonnage peut être effectué à l'aide d'une horloge d'échantillonnage produite par un générateur d'horloge du dispositif récepteur. Le générateur d'horloge peut être mis hors tension jusqu'à ce que la nature du signal soit déterminée, de façon à réduire la consommation énergétique du dispositif récepteur.

Les comparateurs, le générateur d'impulsions et l'unité de traitement sont alors utilisés comme un système de réveil de radio (plus connu par l'homme du métier selon l'appellation anglaise « wake-up radio ») pour indiquer qu'un signal radiofréquence de nature attendue (c'est-à-dire une nature pouvant être traitée par les moyens de traitement de signal) a été reçu.

Le dispositif récepteur est alors configuré pour mettre hors tension le générateur d'horloge tant qu'un signal radiofréquence d'une nature attendue n'est pas reçu.

En variante, le dispositif récepteur peut comprendre un décodeur configuré pour décoder le signal radiofréquence à partir dudit au moins un train d'impulsions corrigé, en fonction de la nature déterminée du signal radiofréquence.

Le dispositif récepteur est alors configuré pour extraire l'ensemble de l'information utile du signal radiofréquence à partir dudit au moins un train d'impulsions élaboré.

Dans un mode de réalisation, le signal radiofréquence est choisi parmi un signal Wi-Fi, un signal Bluetooth et un signal LTE.

Selon un autre aspect, il est proposé un objet comprenant un dispositif récepteur tel que décrit précédemment.

Un tel objet peut notamment être utilisé dans le domaine de l'Internet des objets. En particulier, un tel objet est alors configuré pour recevoir des données provenant d'un appareil ou d'un serveur distant, par l'intermédiaire du réseau Internet par exemple. Un tel objet permet notamment de recevoir des données par l'intermédiaire d'un signal radiofréquence en consommant peu d'énergie.

D'autres avantages et caractéristiques de l'invention apparaîtront à l'examen de la description détaillée de modes de mise en œuvre et de réalisation, nullement limitatifs, et des dessins annexés sur lesquels :
[Fig 1]
[Fig 2]
[Fig 3]
[Fig 4]
[Fig 5]
[Fig 6]

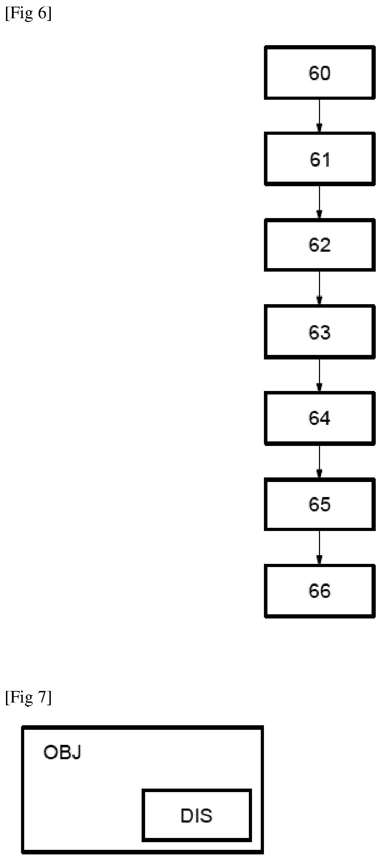

[Fig 7] illustrent schématiquement des modes de réalisation et de mise en œuvre de l'invention.

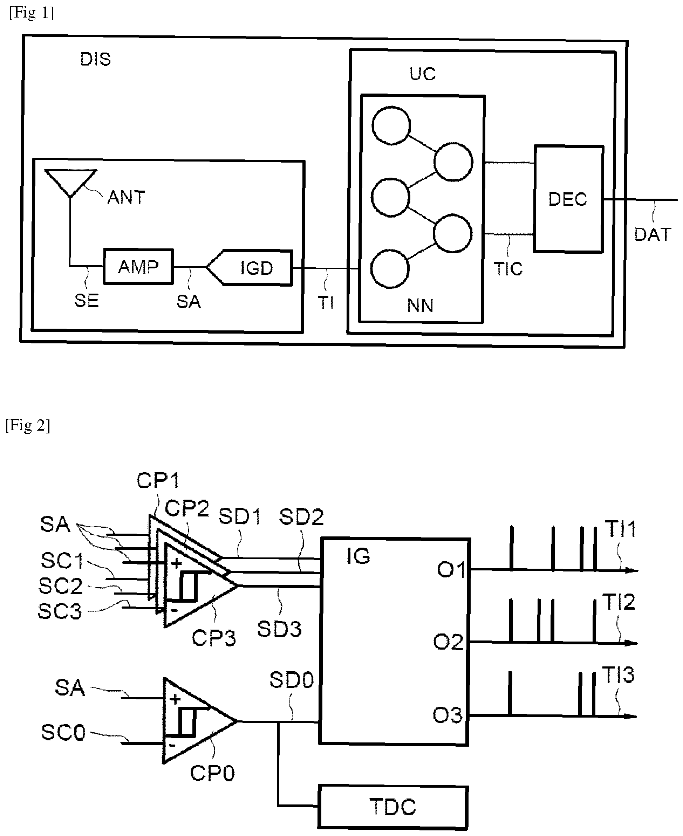

La figure 1 illustre un dispositif récepteur DIS1 selon un mode de réalisation de l'invention pouvant servir de radiologicielle.

Le dispositif récepteur DIS1 comprend une antenne ANT configurée pour recevoir un signal radiofréquence et convertir ce signal en un signal électrique SE.

Le signal radiofréquence est d'une nature donnée. La nature du signal radiofréquence peut être en conformité avec une norme, un protocole. Par exemple, le signal radiofréquence peut être un signal Wi-fi ou Bluetooth ou encore LTE (de l'anglais « Long Term Evolution »).

Le signal radiofréquence est d'une nature donnée et porte un en-tête représentatif de la nature du signal radiofréquence. Le signal radiofréquence porte également une information utile, c'est-à-dire des données pouvant être utilisées par le dispositif récepteur.

La nature du signal radiofréquence et l'information utile du signal radiofréquence sont représentées sous forme de symboles.

Le signal radiofréquence reçu peut comprendre du bruit et des erreurs introduites dans la transmission du signal radiofréquence.

Le dispositif récepteur comprend également un amplificateur AMP faible bruit à bande large connecté à l'antenne. L'amplificateur AMP est configuré pour recevoir en entrée le signal électrique SE généré par l'antenne ANT et pour amplifier ce signal électrique SE. Le signal amplifié SA obtenue est délivré en sortie de l'amplificateur AMP.

Le dispositif récepteur comprend un dispositif de génération d'impulsions IGD représenté plus en détail à la figure 2.

Le dispositif de génération d'impulsions IGD comprend une pluralité de comparateurs CP0, CP1, CP2, CP3 reliés à la sortie de l'amplificateur AMP. Chaque comparateur CP0, CP1, CP2, CP3 reçoit respectivement en entrée le signal amplifié SA et un signal de comparaison SC0, SC1, SC2, SC3 définissant chacun une tension seuil. Chaque comparateur CP0, CP1, CP2, CP3 est ainsi associé à une tension seuil donnée.

Les comparateurs CP0, CP1, CP2, CP3 sont ainsi configurés pour détecter des dépassements par rapport aux tensions seuils. Ces dépassements sont signalés respectivement par des signaux SD0, SD1, SD2 et SD3 en sortie des comparateurs CP0, CP1, CP2 et CP3.

Plus particulièrement, de préférence, le dispositif de génération d'impulsions IGD comprend un premier comparateur CP0 utilisé pour détecter un dépassement d'une tension seuil de 0 volt.

Le dispositif de génération d'impulsions IGD comprend en outre une série de comparateurs CP1, CP2, CP3 permettant de détecter des dépassements par rapport à d'autres tensions seuils. Dans le mode de réalisation représenté, le dispositif de génération d'impulsions IGD comprend trois comparateurs. Néanmoins, il est possible de prévoir un nombre différent de comparateurs en fonction d'une résolution souhaitée de détection.

Le dispositif de génération d'impulsions IGD comprend en outre un convertisseur temps-numérique TDC (en anglais « *Time to digital converter* »)*.* De préférence, le convertisseur temps-numérique TDC reçoit en entrée la sortie du comparateur CP0. Le convertisseur temps-numérique TDC est alors configuré pour mesurer une durée entre deux suites de détection, une suite de détections se terminant lorsqu'aucun dépassement n'a été détecté sur une durée supérieure au temps de transmission d'un symbole.

Le dispositif de génération d'impulsions IGD comprend également un générateur d'impulsions IG. Le générateur d'impulsions IG comprend plusieurs entrées configurées pour recevoir les signaux de détection des comparateurs CP1, CP2, CP3.

Le générateur d'impulsions IG est également configuré pour générer en sortie une impulsion dès qu'un dépassement d'un seuil de tension est détecté par un comparateur CP1, CP2, CP3. Ainsi, le générateur d'impulsions comprend plusieurs sorties O1, O2, O3, chaque sortie O1, O2, O3 étant associée à une détection liée respectivement au comparateur CP1, CP2, CP3.

Le générateur d'impulsions IG permet donc de générer plusieurs trains d'impulsions TI1, TI2, TI3 lorsque plusieurs dépassements de seuils de tension sont détectés par plusieurs comparateurs CP1, CP2 et CP3 au cours de la réception du signal radiofréquence.

Certaines impulsions de ces trains d'impulsions TI1, TI2, TI3 peuvent être représentatives de symboles compris dans le signal radiofréquence reçu.

D'autres impulsions peuvent résulter d'un bruit compris dans le signal radiofréquence reçu ou d'erreurs introduites dans le signal radiofréquence lors de sa transmission.

Le générateur d'impulsions IG peut être notamment formé par une porte logique de type ET avec un délai sur une de ses entrées.

Le dispositif récepteur DIS1 comprend en outre une unité de traitement UT configurée pour mettre en œuvre un réseau de neurones artificiel NN.

L'unité de traitement UT peut être un microprocesseur par exemple.

Ce réseau de neurones artificiel NN est enregistré sous forme d'un programme informatique dans une mémoire de l'unité de traitement.

Le réseau de neurones NN reçoit comme entrée les trains d'impulsions TI1, TI2 et TI3 générés par le générateur d'impulsions IG.

En particulier, le réseau de neurones artificiel est entraîné préalablement pour reconnaître des impulsions représentatives de symboles dans les trains d'impulsions qu'il reçoit de façon à générer des trains d'impulsions corrigés dans lesquels les impulsions résultant d'un bruit ou bien d'erreurs issues de la transmission sont éliminées.

Les impulsions des trains d'impulsions corrigés sont donc représentatives des symboles contenus dans le signal radiofréquence.

En particulier, le réseau de neurones représenté permet de générer les trains d'impulsions corrigés TIC1, TIC2 et TIC3.

Le réseau de neurones génère ainsi en sortie des trains d'impulsions corrigés TIC1, TIC2 et TIC3.

En particulier, le réseau de neurones NN comprend une succession de couches de neurones.

Chaque couche prend en entrée des données auxquelles des poids sont appliqués et délivre en sortie des données de sortie après traitement par des fonctions d'activation des neurones de ladite couche. Ces données de sortie sont transmises à la couche suivante dans le réseau de neurones.

Les poids sont des données, plus particulièrement des paramètres, de neurones configurables pour obtenir de bonnes données de sortie.

Les poids sont ajustés lors d'une phase d'apprentissage généralement supervisée, notamment en exécutant le réseau de neurones avec comme données d'entrée des trains d'impulsions déjà classifiés d'une base de données de référence.

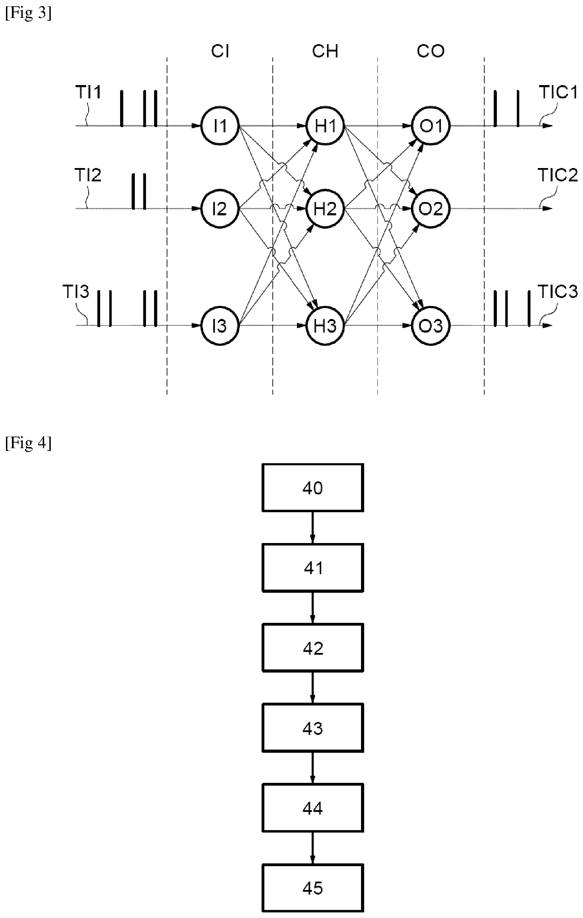

Par exemple, comme représenté à la figure 3 à titre d'illustration, la première couche CI est une couche d'entrée comprenant un neurone I1 recevant le train d'impulsions TI1, un neurone I2 recevant le train d'impulsions TI2 et un neurone I3 recevant le train d'impulsions TI3.

La dernière couche CO est une couche de sortie comprenant un neurone O1 délivrant le train d'impulsion corrigé TIC1, un neurone I2 délivrant le train d'impulsion corrigé TIC2 et un neurone I3 délivrant le train d'impulsions corrigé TIC3.

Le réseau de neurones NN comprend également une ou plusieurs couches cachées CH entre la couche d'entrée CI et la couche de sortie CO. À la figure 3, une seule couche cachée CH est représentée. Cette couche CH comprend des neurones H1, H2 et H3 prenant en entrée les sorties des neurones I1, I2 et I3 de la couche d'entrée CI. Les neurones O1, O2, O3 de la couche de sortie CO prennent alors en entrée les sorties de ces neurones H1, H2 et H3.

Les couches cachées peuvent être des couches de convolution et/ou de propagation. Ces couches sont configurées pour identifier les impulsions représentatives de symboles dans les trains d'impulsions générés.

Les durées mesurées par le convertisseur temps-numérique entre deux suites de détections du comparateur CP0 sont utilisées pour définir des fenêtres temporelles pendant lesquels les trains d'impulsions sont à analyser par le réseau de neurones NN.

Le dispositif récepteur DIS1 comprend un décodeur DEC pouvant être mis en œuvre par l'unité de traitement UT.

Le décodeur DEC est configuré pour identifier les symboles dans les trains d'impulsions corrigés qu'il reçoit.

En particulier, le décodeur DEC est configuré pour reconnaître la nature du signal radiofréquence compris dans l'en-tête du signal à partir des symboles identifiés.

Le décodeur DEC est également configuré pour traduire les symboles identifiés des trains d'impulsions corrigés TIC1, TIC2, TIC3 délivrés par le réseau de neurones NN en un flux de données binaires DAT représentatif de l'information contenue dans le signal radiofréquence, en fonction de la nature identifiée du signal radiofréquence.

Le dispositif récepteur DIS1 est ainsi configuré pour mettre en œuvre un procédé de réception représenté à la figure 4.

Le procédé de réception comprend une étape 40 de réception dans laquelle l'antenne ANT reçoit un signal radiofréquence et le convertit en un signal électrique SE.

Le procédé de réception comprend ensuite une étape 41 d'amplification dans laquelle l'amplificateur AMP amplifie le signal électrique SE produit par l'antenne ANT. Le signal amplifié SA obtenue est ensuite transmis aux comparateurs CP0, CP1, CP2 et CP3.

Ainsi, le procédé comprend une étape 42 de détection de dépassements dans laquelle les comparateurs CP0, CP1, CP2 et CP3 comparent le signal amplifié aux différentes tensions seuil. Lorsque le signal amplifié devient supérieur à une tension seuil, le comparateur CP0, CP1, CP2 et CP3 associé à cette tension seuil émet un signal de détection.

Le procédé comprend en outre une étape 43 d'élaboration d'un train d'impulsions par le générateur d'impulsions IG. Chaque impulsion représente une détection d'un dépassement d'une tension seuil.

Le générateur d'impulsions IG permet donc de traduire chaque détection d'un dépassement d'une tension seuil en une impulsion.

Le procédé comprend ensuite une étape 44 d'élaboration des trains d'impulsions corrigés TIC1, TIC2, TIC3.

Dans cette étape, l'unité de traitement exécute le réseau de neurones NN de façon à élaborer les trains d'impulsions corrigés TIC1, TIC2, TIC3 à partir des trains d'impulsions générés TI1, TI2, TI3.

Les trains d'impulsions corrigés TIC1, TIC2 et TIC3 sont ensuite transmises au décodeur.

Le procédé comprend ensuite une étape 45 de décodage mise en œuvre par le décodeur DEC. Dans cette étape de décodage, le décodeur DEC identifie tout d'abord les symboles dans les trains d'impulsions corrigés TIC1, TIC2 et TIC3.

Le décodeur DEC détermine ensuite la nature du signal radiofréquence à partir d'un symbole identifié issu de l'en-tête du signal radiofréquence.

Le décodeur DEC traduit ensuite les symboles identifiés associés à l'information utile en un flux de données binaires DAT représentatif de l'information utile du signal radiofréquence, en fonction de la nature déterminée du signal radiofréquence.

La détermination de la nature du signal radiofréquence permet notamment de savoir si le signal radiofréquence doit être traité ou non.

Ainsi, l'élaboration d'un train d'impulsions à partir d'une détection de dépassements de niveau de tension permet d'extraire l'information utile du signal radiofréquence sans procéder à un échantillonnage du signal radiofréquence.

Un tel procédé permet donc de réduire la consommation d'énergie pour extraire l'information utile d'un signal radiofréquence.

Un tel procédé permet également de réduire le nombre d'échantillon à analyser en analysant uniquement un nombre réduit d'impulsions. Un tel procédé permet également d'éviter d'avoir des conditions limitées concernant la largeur de bande du signal radiofréquence reçu.

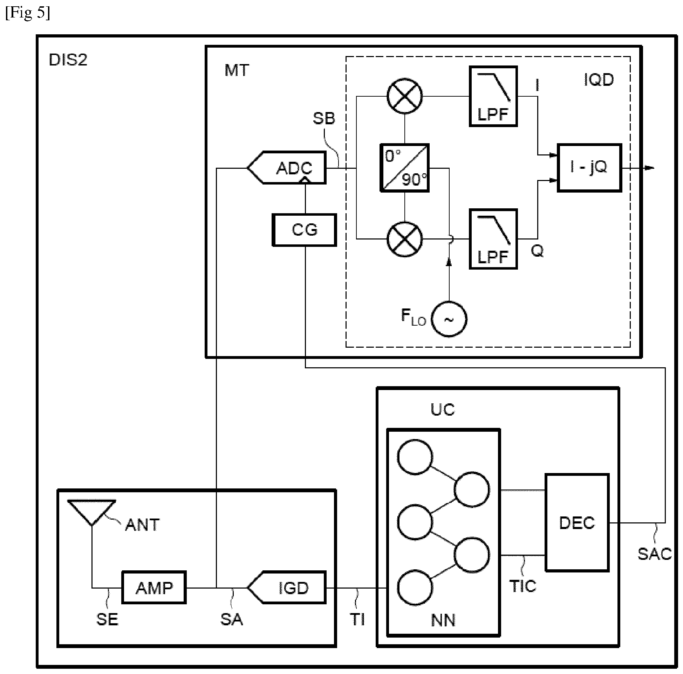

La figure 5 illustre un dispositif récepteur DIS2 selon un autre mode de réalisation de l'invention pouvant également servir de radio logicielle.

Ici, le dispositif récepteur DIS2 comprend également une antenne ANT, un amplificateur AMP faible bruit, un dispositif de génération d'impulsion IGD ainsi qu'une unité de traitement UT tels que décrits précédemment.

Le dispositif récepteur de la figure 5 diffère de celui de la figure 1 par le fait que l'unité de traitement UT n'est pas utilisée pour décoder l'information utile du signal radiofréquence à partir des trains d'impulsions corrigés.

En particulier, l'information utile est extraite du signal radiofréquence à l'aide de moyens de traitement MT de signal.

Les moyens de traitement comprennent un convertisseur analogique-numérique haute fréquence CAD configuré pour échantillonner le signal électrique amplifié SA délivré par l'amplificateur AMP. En particulier, les moyens de traitement comprennent un générateur d'horloge CG configuré pour pouvoir générer une horloge d'échantillonnage. Cette horloge d'échantillonnage est utilisée pour cadencer l'échantillonnage effectué par le convertisseur analogique-numérique.

Les moyens de traitement MT comprennent également un démodulateur d'amplitude IQD, notamment un démodulateur d'amplitude en quadrature bien connu de l'homme du métier, notamment son utilisation dans les radios logicielles.

Les moyens de traitement MT sont configurés pour extraire l'information utile d'un signal radiofréquence d'une nature donnée.

Le dispositif de génération d'impulsion IGD et l'unité de traitement UT sont utilisés pour déterminer la nature du signal radiofréquence puis enclencher les moyens de traitement MT si la nature du signal est celle pour laquelle ces moyens de traitement MT sont configurés.

En particulier, l'unité de traitement UT est configurée pour mettre en œuvre le réseau de neurones NN afin d'élaborer des trains d'impulsions corrigés à partir de trains d'impulsions générés par le dispositif de génération d'impulsion, comme cela a été décrit pour le dispositif récepteur de la figure 1.

En outre, le décodeur DEC est configuré pour identifier un symbole, de l'en-tête du signal, représentatif d'une nature attendue du signal radiofréquence à partir des trains d'impulsions corrigés, la nature attendue étant une nature pouvant être traitée par les moyens de traitement MT.

Le décodeur DEC est alors configuré pour enclencher les moyens de traitement MT lorsqu'il a identifié un symbole représentatif de ladite nature attendue.

Le dispositif de génération d'impulsion IGD et l'unité de traitement UT peuvent alors être utilisés comme un système de réveil de radio pour indiquer qu'un signal radiofréquence de nature attendue a été reçu.

Ainsi, le dispositif récepteur DIS2 de 1a figure 5 est configuré pour mettre en œuvre un procédé de réception illustré à la figure 6.

Au début d'un tel procédé, le générateur d'horloge CG est désactivé et ne consomme donc pas d'énergie.

Le procédé de réception comprend une étape 60 de réception dans laquelle l'antenne ANT reçoit un signal radiofréquence et le convertit en un signal électrique.

Le procédé de réception comprend ensuite une étape 61 d'amplification dans laquelle l'amplificateur AMP amplifie le signal électrique SE produit par l'antenne. Le signal amplifié SA obtenue est ensuite transmis aux comparateurs du dispositif de génération d'impulsions IGD.

Ainsi, le procédé comprend une étape 62 de détection de dépassements dans laquelle les comparateurs comparent le signal amplifié aux différentes tensions seuil. Lorsque le signal amplifié devient supérieur à une tension seuil, le comparateur émet un signal de détection.

Le procédé comprend en outre une étape 63 d'élaboration d'un train d'impulsions par le générateur d'impulsions du dispositif de génération d'impulsion IGD. Chaque impulsion représente une détection d'un dépassement d'une tension seuil.

Le générateur d'impulsions permet donc de traduire chaque détection d'un dépassement d'une tension seuil en une impulsion.

Le procédé comprend ensuite une étape 64 de détermination de la nature du signal radiofréquence à partir de chaque train d'impulsions générés par le générateur d'impulsions.

Le procédé comprend ensuite une étape 44 d'élaboration des trains d'impulsions corrigés TIC1, TIC2, TIC3.

Dans cette étape, l'unité de traitement exécute le réseau de neurones NN de façon à élaborer les trains d'impulsions corrigés TIC1, TIC2, TIC3 à partir des trains d'impulsions générés TI1, TI2, TI3.

Les trains d'impulsions corrigés TIC1, TIC2 et TIC3 sont ensuite transmises au décodeur.

Le procédé comprend ensuite une étape 45 de décodage mise en œuvre par le décodeur DEC. Dans cette étape de décodage, le décodeur DEC identifie si des impulsions des trains d'impulsions corrigés correspondent à un symbole représentatif de la nature attendue du signal radiofréquence.

Si le décodeur DEC identifie un symbole représentatif de la nature attendue à partir des trains d'impulsions corrigés, alors l'unité de traitement UT émet un signal d'activation SAC aux moyens de traitement MT. En particulier, le signal d'activation permet d'activer le générateur d'horloge CG.

Une fois le générateur d'horloge activé, le procédé comporte une étape 65 d'échantillonnage du signal électrique amplifié SA à partir du signal radiofréquence reçu par le convertisseur analogique-numérique ADC. Cet échantillonnage permet d'obtenir un signal numérique SB représentatif du signal radiofréquence.

Puis, le procédé comprend une étape 66 de démodulation du signal numérique SB par le démodulateur d'amplitude IQD afin de pouvoir extraire l'information utile portée par le signal radiofréquence.

Une fois que l'information utile a été extraite, le générateur d'horloge CG est désactivé pour réduire la consommation d'énergie du dispositif récepteur.

La figure 7 représente un objet OBJ comprenant un dispositif récepteur DIS pouvant être choisi parmi le dispositif récepteur DIS1 représenté à la figure 1 et le dispositif récepteur DIS2 représenté à la figure 5.

Un tel objet OBJ peut notamment être utilisé dans le domaine de l'Internet des objets. En particulier, un tel objet est alors configuré pour recevoir des données provenant d'un appareil ou d'un serveur distant, par l'intermédiaire du réseau Internet par exemple. Un tel objet OBJ permet de recevoir des données par l'intermédiaire d'un signal radiofréquence en consommant peu d'énergie.

## Revendications

1. Procédé de réception de données dans une transmission radiofréquence comprenant :
- une réception (40, 60) d'un signal radiofréquence d'une nature donnée et une conversion du signal radiofréquence en un signal électrique,
- au moins une détection (42, 62) de différents niveaux de tension dans le signal électrique,
- une élaboration (43, 63) d'un train d'impulsions pour chaque niveau de tension détecté dans le signal électrique, les impulsions de chaque train d'impulsions étant représentatives de chaque détection d'un même niveau de tension dans le signal électrique,
- une détermination (44, 64) de la nature du signal radiofréquence à partir des trains d'impulsions, la détermination (44, 64) de la nature du signal radiofréquence comprenant une mise en œuvre d'un réseau de neurones artificiel (NN), le réseau de neurones artificiel comprenant une succession de couches (CI, CH, CO) dont une couche d'entrée (CI) pour récupérer les trains d'impulsions élaborés, au moins une couche cachée (CH) de convolution et/ou de propagation pour élaborer des trains d'impulsions corrigés (TIC1, TIC2, TIC3) comprenant des impulsions représentatives de la nature du signal radiofréquence et une couche de sortie (CO) pour transmettre les trains d'impulsions corrigés, la nature du signal radiofréquence étant identifiée à partir des trains d'impulsions corrigés (TIC1, TIC2, TIC3).

2. Procédé selon la revendication 1, dans lequel le signal radiofréquence comporte un en-tête représentatif de la nature du signal radiofréquence, ladite élaboration (43, 63) comprenant une élaboration de trains d'impulsions associés à l'en-tête du signal radiofréquence reçu.

3. Procédé selon l'une des revendications 1 à 2, dans lequel la détection (42, 62) d'au moins un niveau de tension du signal électrique comprend une comparaison du signal électrique à au moins un seuil.

4. Procédé selon l'une des revendications 1 à 3, comprenant, une fois la nature du signal déterminée, un échantillonnage (65) puis un traitement (66) du signal électronique conforme à la nature du signal radiofréquence déterminée.

5. Procédé selon l'une des revendications 1 à 3, comprenant un décodage (45) du signal radiofréquence à partir des trains d'impulsions corrigé, en fonction de la nature déterminée du signal radiofréquence.

6. Procédé selon l'une des revendications 1 à 5 dans lequel le signal radiofréquence est choisi parmi un signal Wi-Fi, un signal Bluetooth et un signal LTE.

7. Dispositif récepteur radiofréquence comprenant :
- une interface d'entrée (ANT, AMP) configurée pour recevoir un signal radiofréquence d'une nature donnée et le convertir en un signal électrique,
- des moyens de détection (CP1, CP2, CP3) configurés pour détecter des niveaux de tension dans le signal électrique,
- un générateur d'impulsions (IG) configuré pour élaborer un train d'impulsions pour chaque niveau de tension détecté dans le signal électrique, les impulsions de chaque train d'impulsions étant représentatives de chaque détection d'un même niveau de tension dans le signal électrique,
- une unité de traitement (UT) configurée pour déterminer la nature du signal radiofréquence à partir des trains d'impulsions (TI1, TI2, TI3) en mettant en œuvre un réseau de neurones artificiel (NN), le réseau de neurones artificiel comprenant une succession de couches (CI, CH, CO) dont une couche d'entrée (CI) pour récupérer les trains d'impulsions élaborés, au moins une couche cachée (CH) de convolution et/ou de propagation pour élaborer des trains d'impulsions corrigés (TIC1, TIC2, TIC3) comprenant des impulsions représentatives de la nature du signal radiofréquence et une couche de sortie (CO) pour transmettre les trains d'impulsions corrigés,
- un décodeur (DEC) configuré pour identifier la nature du signal radiofréquence à partir des impulsions des trains d'impulsions corrigés (TIC1, TIC2, TIC3).

8. Dispositif récepteur selon la revendication 7, dans lequel l'interface d'entrée (ANT, AMP) est configurée pour recevoir un signal radiofréquence comportant un en-tête représentatif de la nature du signal radiofréquence, le générateur d'impulsions (IG) étant configuré pour élaborer des trains d'impulsions associés à l'en-tête du signal radiofréquence reçu.

9. Dispositif récepteur selon l'une des revendications 7 à 8, dans lequel les moyens de détection comprennent au moins un comparateur (CP1, CP2, CP3) configuré pour détecter au moins un niveau de tension du signal électrique en comparant le signal électrique à au moins un seuil.

10. Dispositif récepteur selon l'une des revendications 7 à 9, comprenant en outre des moyens de traitement de signal (MT), configurés pour, une fois que la nature du signal radiofréquence a été déterminée, échantillonner puis traiter le signal électrique conformément à la nature du signal déterminée.

11. Dispositif récepteur selon l'une des revendications 7 à 9, dans lequel le décodeur (DEC) est configuré pour décoder le signal radiofréquence à partir des trains d'impulsions corrigé, en fonction de la nature déterminée du signal radiofréquence.

12. Dispositif récepteur selon l'une des revendications 7 à 11, dans lequel le signal radiofréquence est choisi parmi un signal Wi-Fi, un signal Bluetooth et un signal LTE

13. Objet comprenant un dispositif récepteur selon l'une des revendications 7 à 12.

## Patentansprüche

1. Verfahren zum Empfangen von Daten in einer Funkfrequenzübertragung, umfassend:
- Empfangen (40, 60) eines Funkfrequenzsignals einer bestimmten Art und Umwandeln des Funkfrequenzsignals in ein elektrisches Signal,
- mindestens ein Erfassen (42, 62) verschiedener Spannungspegel im elektrischen Signal,
- Erstellen (43, 63) eines Impulssatzes für jeden im elektrischen Signal erfassten Spannungspegel, wobei die Impulse jedes Impulssatzes für jede Erfassung eines gleichen Spannungspegels im elektrischen Signal repräsentativ sind,
- Bestimmen (44, 64) der Art des Funkfrequenzsignals aus den Impulssätzen, wobei das Bestimmen (44, 64) der Art des Funkfrequenzsignals ein Implementieren eines künstlichen neuronalen Netzwerks (NN) umfasst, wobei das künstliche neuronale Netzwerk eine Folge von Schichten (CI, CH, CO) umfasst, darunter eine Eingangsschicht (CI), um die erstellten Impulssätze abzurufen, mindestens eine verborgene Faltungs- und/oder Ausbreitungsschicht (CH), um korrigierte Impulssätze (TIC1, TIC2, TIC3) zu erstellen, die Impulse umfassen, die für die Art des Funkfrequenzsignals repräsentativ sind, und eine Ausgangsschicht (CO), um die korrigierten Impulssätze zu übertragen, wobei die Art des Funkfrequenzsignals aus den korrigierten Impulssätzen (TIC1, TIC2, TIC3) identifiziert wird.

2. Verfahren nach Anspruch 1, wobei das Funkfrequenzsignal einen Kopfbereich enthält, der für die Art des Funkfrequenzsignals repräsentativ ist, wobei das Erstellen (43, 63) ein Erstellen von Impulssätzen umfasst, die mit dem Kopfbereich des empfangenen Funkfrequenzsignals verbunden sind.

3. Verfahren nach einem der Ansprüche 1 bis 2, wobei das Erfassen (42, 62) mindestens eines Spannungspegels des elektrischen Signals ein Vergleichen des elektrischen Signals mit mindestens einem Schwellenwert umfasst.

4. Verfahren nach einem der Ansprüche 1 bis 3, umfassend, nachdem die Art des Signals bestimmt wurde, ein Abtasten (65) und anschließend ein Verarbeiten (66) des elektronischen Signals entsprechend der Art des bestimmten Funkfrequenzsignals.

5. Verfahren nach einem der Ansprüche 1 bis 3, umfassend eine Decodieren (45) des korrigierten Funkfrequenzsignals aus den Impulssätzen in Abhängigkeit von der bestimmten Art des Funkfrequenzsignals.

6. Verfahren nach einem der Ansprüche 1 bis 5, wobei das Funkfrequenzsignal aus einem WLAN-Signal, einem Bluetooth-Signal und einem LTE-Signal ausgewählt ist.

7. Funkfrequenz-Empfangsvorrichtung, umfassend:
- eine Eingangsschnittstelle (ANT, AMP), die so konfiguriert ist, dass sie ein Funkfrequenzsignal einer bestimmten Art empfängt und es in ein elektrisches Signal umwandelt,
- Erfassungsmittel (CP1, CP2, CP3), die so konfiguriert sind, dass sie Spannungspegel im elektrischen Signal erfassen,
- einen Impulsgenerator (IG), der so konfiguriert ist, dass er einen Impulssatz für jeden im elektrischen Signal erfassten Spannungspegel erstellt, wobei die Impulse jedes Impulssatzes für jede Erfassung eines gleichen Spannungspegels im elektrischen Signal repräsentativ sind,
- eine Verarbeitungseinheit (UT), die so konfiguriert ist, dass sie die Art des Funkfrequenzsignals aus den Impulssätzen (TI1, TI2, TI3) bestimmt, indem sie ein künstliches neuronales Netzwerk (NN) implementiert, wobei das künstliche neuronale Netzwerk eine Folge von Schichten (CI, CH, CO) umfasst, darunter eine Eingangsschicht (CI), um die erstellten Impulssätze abzurufen, mindestens eine verborgene Faltungs- und/oder Ausbreitungsschicht (CH), um die korrigierten Impulssätze (TIC1, TIC2, TIC3) zu erstellen, die Impulse umfasst, die für die Art des Funkfrequenzsignals repräsentativ sind, und eine Ausgangsschicht (CO), um die korrigierten Impulssätze zu übertragen,
- einen Decoder (DEC), der so konfiguriert ist, dass er die Art des Funkfrequenzsignals aus den Impulsen der korrigierten Impulssätze (TIC1, TIC2, TIC3) identifiziert.

8. Empfangsvorrichtung nach Anspruch 7, wobei die Eingangsschnittstelle (ANT, AMP) so konfiguriert ist, dass sie ein Funkfrequenzsignal empfängt, das einen Kopfbereich aufweist, der für die Art des Funkfrequenzsignals repräsentativ ist, wobei der Impulsgenerator (IG) so konfiguriert ist, dass er Impulssätze erstellt, die mit dem Kopfbereich des empfangenen Funkfrequenzsignals verbunden sind.

9. Empfangsvorrichtung nach einem der Ansprüche 7 bis 8, wobei die Erfassungsmittel mindestens einen Komparator (CP1, CP2, CP3) umfassen, der so konfiguriert ist, dass er mindestens einen Spannungspegel des elektrischen Signals erfasst, indem er das elektrische Signal mit mindestens einem Schwellenwert vergleicht.

10. Empfangsvorrichtung nach einem der Ansprüche 7 bis 9, ferner umfassend Signalverarbeitungsmittel (MT), die so konfiguriert sind, dass sie, nachdem die Art des Funkfrequenzsignals bestimmt wurde, das elektrische Signal abtastet und anschließend entsprechend der bestimmten Art des Signals verarbeitet.

11. Empfangsvorrichtung nach einem der Ansprüche 7 bis 9, wobei der Decoder (DEC) so konfiguriert ist, dass er das Funkfrequenzsignal aus den korrigierten Impulssätzen entsprechend der bestimmten Art des Funkfrequenzsignals decodiert.

12. Empfangsvorrichtung nach einem der Ansprüche 7 bis 11, wobei das Funkfrequenzsignal aus einem WLAN-Signal, einem Bluetooth-Signal und einem LTE-Signal ausgewählt ist.

13. Gegenstand, der eine Empfangsvorrichtung nach einem der Ansprüche 7 bis 12 umfasst.

## Claims

1. A method for receiving data in a radio frequency transmission comprising:
- receiving (40, 60) a radio frequency signal of a given nature and converting the radio frequency signal into an electrical signal,
- at least one detection (42, 62) of different voltage levels in the electrical signal,
- generating (43, 63) a pulse train for each voltage level detected in the electrical signal, the pulses of each pulse train being representative of each detection of a same voltage level in the electrical signal,
- determining (44, 64) the nature of the radio frequency signal from the pulse trains, determining (44, 64) the nature of the radio frequency signal comprising implementing an artificial neural network (NN), the artificial neural network comprising a succession of layers (CI, CH, CO) including an input layer (CI) to recover the generated pulse trains, at least one hidden convolution and/or propagation layer (CH) to generate corrected pulse trains (TIC1, TIC2, TIC3) comprising pulses representative of the nature of the radio frequency signal and an output layer (CO) to transmit the corrected pulse trains, the nature of the radio frequency signal being identified from the corrected pulse trains (TIC1, TIC2, TIC3).

2. The method according to claim 1, wherein the radio frequency signal includes a header representative of the nature of the radio frequency signal, said generation (43, 63) comprising a generation of pulse trains associated with the header of the received radio frequency signal.

3. The method according to one of claims 1 to 2, wherein the detection (42, 62) of at least one voltage level of the electrical signal comprises a comparison of the electrical signal with at least one threshold.

4. The method according to one of claims 1 to 3, comprising, once the nature of the signal has been determined, sampling (65) then processing (66) the electronic signal in accordance with the nature of the determined radio frequency signal.

5. The method according to one of claims 1 to 3, comprising decoding (45) the radio frequency signal from the corrected pulse trains, depending on the determined nature of the radio frequency signal.

6. The method according to one of claims 1 to 5, wherein the radio frequency signal is selected from a Wi-Fi signal, a Bluetooth signal, and an LTE signal.

7. A radio frequency receiver device comprising:
- an input interface (ANT, AMP) configured to receive a radio frequency signal of a given nature and convert it into an electrical signal,
- detection means (CP1, CP2, CP3) configured to detect voltage levels in the electrical signal,
- a pulse generator (IG) configured to generate a pulse train for each voltage level detected in the electrical signal, the pulses of each pulse train being representative of each detection of a same voltage level in the electrical signal,
- a processing unit (UT) configured to determine the nature of the radio frequency signal from the pulse trains (TI1, TI2, TI3) by implementing an artificial neural network (NN), the artificial neural network comprising a succession of layers (CI, CH, CO) including an input layer (CI) for recovering the generated pulse trains, at least one convolution and/or propagation hidden layer (CH) for generating corrected pulse trains (TIC1, TIC2, TIC3) comprising pulses representative of the nature of the radio frequency signal and an output layer (CO) to transmit the corrected pulse trains,
- a decoder (DEC) configured to identify the nature of the radio frequency signal from the pulses of the corrected pulse trains (TIC1, TIC2, TIC3).

8. The receiver device according to claim 7, wherein the input interface (ANT, AMP) is configured to receive a radio frequency signal including a header representative of the nature of the radio frequency signal, the pulse generator (IG) being configured to generate pulse trains associated with the header of the received radio frequency signal.

9. The receiver device according to one of claims 7 to 8, wherein the detection means comprise at least one comparator (CP1, CP2, CP3) configured to detect at least one voltage level of the electrical signal by comparing the electrical signal with at least one threshold.

10. The receiver device according to any one of claims 7 to 9, further comprising signal processing means (MT), configured to, once the nature of the radio frequency signal has been determined, sample then process the electrical signal in accordance with the nature of the determined signal.

11. The receiver device according to any one of claims 7 to 9, wherein the decoder (DEC) is configured to decode the radio frequency signal from the corrected pulse trains, according to the determined nature of the radio frequency signal.

12. The receiver device according to any one of claims 7 to 11, wherein the radio frequency signal is selected from a Wi-Fi signal, a Bluetooth signal, and an LTE signal

13. An object comprising a receiver device according to one of claims 7 to 12.
